# EUROPEAN PATENT SPECIFICATION

(11) **EP 3 440 390 B1**
(45) Date of publication and mention of the grant of the patent: **18.03.2020**
(21) Application number: 17716144.5
(22) Date of filing: 27.03.2017
(51) Int. Cl.: F16L 5/00, H02G 3/22, E03C 1/042

(54) **A ONE-PIECE ROSETTE, A METHOD OF MANUFACTURING THE ONE-PIECE ROSETTE AND USES THEREOF**
EINTEILIGE ROSETTE, VERFAHREN ZUR HERSTELLUNG DER EINTEILIGEN ROSETTE UND VERWENDUNGEN DAVON
ROSETTE MONOBLOC, PROCÉDÉ DE FABRICATION DE ROSETTE MONOBLOC ET UTILISATIONS DE CELLE-CI

(30) Priority: 07.04.2016 EP 16164191; 28.09.2016 DK 201670765
(43) Date of publication of application: 13.02.2019
(73) Proprietor: THUESEN & THUESEN A/S, 4440 Mørkøv (DK)
(72) Inventor: THUESEN, Jørgen, 4440 Mørkøv (DK)
(74) Representative: Holme Patent A/S
(86) International application number: PCT/EP2017/057192
(87) International publication number: WO 2017/174386

(56) References cited:
- WO-A1-96/21123
- DE-U- 1 760 445
- DE-U- 1 942 378
- DE-U- 7 334 364
- FR-A- 1 193 077
- GB-A- 1 422 846
- US-A- 1 555 480
- US-A- 5 791 365
- US-A1- 2004 104 281

## Description

The present invention relates to a one-piece rosette comprising a ring-shaped main body adapted to be detachably mounted around a tubular structure, which projects from a base structure.

The ring-shaped main body is of the kind that has
- a circumferential wall with a radial width between a central opening and an outer wall perimeter,
- a first free wall end part and a second free wall end part opposite the first free wall end part,
- which first free wall end part and second free wall end part are arranged in overlapping relationship,
   - the opposite first free wall end part and second free wall end part are flexible to and from each other in relation to the central axis of the one-piece rosette, and
- the overlap between the first free wall end part and the second free wall end part is self-locking by being arranged in tension against each other.

In particular the present invention relates to a one-piece pipe rosette to be laid around installation pipes that rise out of the floor, wall or ceiling to cover oversized or untidy holes in the floor, wall or ceiling.

There exist numerous alternative pipe rosettes on the market in various materials and designs. The conventional materials are wood, solid stainless steel, or simply plastic.

Most pipe rosettes are closed rings. Other pipe rosettes are designed as two pieces, which are assembled and locked around the pipe later during retrofitting. The conventional designs and shapes are either completely flat or just slightly conical. Thus some known pipe rosettes can only be fitted around the pipe during installation of the pipes. Other known pipe rosettes can also be retrofitted later. The pipe rosettes of the present invention are particularly suited for retrofitting, and can be retrofitted on a tubular structure even though it is a one-piece object.

One kind of a one-piece rosette is known from British patent no. 1,422,846. This known one-piece rosette is a flexible ring with opposite end parts snap-locked together by means of opposite jaws, one at each opposite end part, to keep a closed conical shape around a pipe. The opposite jaws constitute a complex anchoring means that needs manipulation both when the one-piece rosette is mounted and demounted. If one of the jaws breaks off the one-piece rosette cannot be re-used because it is unable to keep the closed conical shape around the pipe. Only the protruding jaws overlap, not the end parts of the flexible ring.

Another one-piece rosette is known from German utility model no. DE 1760445. This known one-piece rosette is manufactured as an elastic ring and at least one of the opposite end parts has anchoring means in form of adhesive for adhering the opposite end parts firmly together around a pipe. Typically the one-piece rosette is used in relation to heating pipes and the adhesive will dry out fast and the one-piece rosette will open. If subjected to any impact from e.g. a vacuum cleaner this known one-piece rosette can by accident be pushed off the pipe is the adhesive stops to work. Thus eventually it will not work properly.

German utility model no. DE 1942378 describes a one-piece rosette with free wall end parts provided with opposite snap-coupling means.

Any anchoring means on a one-piece rosette has an impact on reusability, visual appearance and complicates the manipulation of the one-piece rosette, both during its mounting and during its demounting.

It is a main aspect of the present invention to remedy the disadvantages of the known one-piece rosettes.

It is yet an aspect of the present invention to provide an alternative to the conventional pipe rosettes.

It is yet an aspect of the present invention to provide a one-piece rosette that has no anchoring means for keeping and/or supporting the mounted condition around a pipe.

It is yet an aspect of the present invention to provide a one-piece pipe rosette that can be mounted after the pipe installation has been finalized.

It is yet an aspect of the present invention to provide a one-piece pipe rosette that is versatile.

It is yet an aspect of the present invention to provide a one-piece pipe rosette that creates an aesthetic transmission between a pipe and a floor, wall or ceiling from which the pipe projects, thereby improving the overall aesthetics of the room.

It is yet an aspect of the present invention to provide a one-piece pipe rosette that is easy and fast to mount.

It is yet an aspect of the present invention to provide a rosette that is less expensive than conventional rosettes.

It is yet an aspect of the present invention to provide a rosette having a design that is not limited to certain specific pipe diameters.

It is yet an aspect of the present invention to provide a one-piece rosette of the kind mentioned in the opening paragraph wherein the opposite free wall end parts of the ring-shaped main body by itself assumes a mounted state in which said opposite free wall end parts subject a pressure force on each other at least at the overlapping section of said opposite free wall end parts.

The novel and unique whereby these and other aspects are achieved according to the present inventions consist in that the opposite free wall end parts are held together around the tubular structure by a tension force at the overlap of the annularly overlapping opposite free wall end parts without physical and mechanical anchoring means.

The design of the rounded corners is thus selected to facilitate mounting the one-piece rosette fast and easy on the tubular structure without damaging interaction with the tubular structure that affects the function of the one-piece rosette and disfigures the tubular structure.

The overlap between the first free wall end part and the second free wall end part is self-locking by being arranged in tension against each other. Thus the ring-shaped main body is configured to assume the tensioned overlap automatically in at least the mounted state of the one-piece rosette in that one of the free wall end parts is held forcibly below the other free wall end part by having being displaced below said other free wall end part prior to the mounting of the one-piece rosette, which displacing creates the self-locking tension, that makes the lowest free wall end part try to assume its most relaxed condition at all times during mounting.

The ring-shaped main body of the one-piece rosette is of the kind wherein the opposite free wall end parts overlap annularly without additional physical and mechanical anchoring means. The only force that holds the opposite free wall end part together around the tubular structure is the tension at the overlap. No snap-couplings and no adhesives are used, nor are such means possible to implement.

Adhesives are not possible to use in the one-piece rosette of the present invention because the contacting faces of the free wall end parts are one the one hand in contact with each other prior to mounting and due to tensioning of the free wall end parts the contacting faces would snap into adhesions as soon as any liner is removed. A further problem is that should the operator manage to keep the tensioned adhesive opposite free wall parts apart the adhesive opposite faces of said opposite free wall parts apart unavoidably comes in guiding contact with the tubular structure during mounting because it is the tubular structure itself that is used as the tool to space the tensioned overlapping free wall end parts apart to guide the one-piece rosette around said tubular structure, as will be explained in further details below. The adhesive property would make the adhesive faces adhere uncontrolled.

Similarly, if the free wall end part has any protruding coupling means, and any anchoring means or similar locking means intended to keep the opposite free wall end parts locked together, such means cannot be present if the overlap shall close intimately. Thus the circumferential wall does not have holes and protrusions that can be used to encourage locking effect of the opposite free wall parts after said opposite free wall parts have been spaced apart. The only feature that contribute to keep the one-piece rosette locked both is the tensioned arrangement of the opposite free wall parts.

Within the context of the present invention the terms "tension", "tensioning", and "tensioned" are used to describe and implies the forces exerted by the free wall end parts on each other.

In an initial state the free wall end parts of the circumferential wall has an annular gap which becomes annularly closed in a pre-mounting state and in the mounted state because the first free wall end part and the second free wall end part now overlap. However, the tension at the overlap is overcome by forcing the opposite free wall end parts axially away from each other, so that the overlap is opened and provides an axial gap with an inherent tendency to close by itself as soon as the force is relieved, which gap can be adapted to enable the one-piece rosette to pass around the tubular structure, such as e.g. a radiator pipe or other kind of installation pipe which projects via a hole in a base structure, such as e.g. floor, wall or ceiling. In order to mount the one-piece rosette around a tubular structure the free wall end parts are brought out of their common plane by spacing said free wall end parts apart along the central axis of the one-piece rosette, which overlapping free wall end parts apart are already in tensioned, contacting interconnection without the presence of anchoring means. When said wall end parts are further spaced apart they become more tensioned and inclined to reassume the slightly tensioned state, which said wall end parts had prior to the induced deformation, so that when the additional tensioning is relieved in the mounted state the circumferential wall ring automatically is closed and self-locks due to an inherent shape-memory given to the one-piece rosette by the tensioning of the free wall end parts, which makes the one-piece rosette to keep the mounted state and fit nicely around the tubular structure at all times to hide any gap between tubular structure and base structure.

Conveniently e.g. a clearance between e.g. a floor and a radiator pipe arising from a too large pipe hole can be completely covered due to the overlapping free wall end parts of the three-dimensional shape of the one-piece rosette of the present invention. These free wall end parts can easily be separated again without the need of tools and when desired, e.g. to completely remove or just to replace the one-piece rosette. As mentioned above no special locking means or anchoring means is required nor mandatory for the overlapping free wall end parts of the circumferential collar of the ring-shaped main body of the one-piece rosette to keep the mounted state of said one-piece rosette. Nor is any tools needed to open the gap between the first free wall end part and the second free wall end part to assume the pre-mounting state wherein the first free wall end part and the second free wall end part are forcible spaced apart in order to pass the one-piece rosette onto the tubular structure. Simply by forcing the tubular structure between the overlapping free wall end parts the axial gaps is forced open and said gap closes by itself due to the tensioning as soon as the tubular structure does not obstruct the overlap anymore, thus when the tubular structure is fully inserted into the central opening.

The one-piece rosette can be provided in different colors that match different interior designs, which increases the need for replacement.

As mentioned above the ring-shaped main body is configured as a collar around the tubular structure, which collar has a slot or opening that facilitate achieving the different states of the rosette.

Within the scope of the present invention the terms "initial state", "pre-mounting state", "intermediate state" and "mounted state" refer to a series of transformations and/or deformations which the one-piece rosette undergoes during manufacturing and mounting, such as in order to be given various three-dimensional shapes in order to be mounted on the tubular structure without tool. The "initial state" is used for any condition, e.g. during manufacturing, prior to the "pre-mounting condition". The "initial state" thus includes a flat condition wherein the one-piece rosette is still a blank that needs further shaping to achieve a rosette function, as well as e.g. any condition suited for the rosette to be painted, including an initial shape of a frustum of a cone. The "pre-mounting state" is the starting condition, e.g. the shape and structure at storage, and wherein the one-piece rosette is ready to use. The term "intermediate state" refers to the series of shape-modifying steps that the rosette undergoes during mounting until it is finally placed on the tubular structure and has reached the "mounted state", in which "mounted state" the free wall end parts of the circumferential wall overlap in tension and the one-piece rosette surrounds the tubular structure without the free wall end parts are locked together by means of anchoring means.

The one-piece rosette according to the present invention is particularly characterized in that none of the first free wall end part or the second free wall end part have an additional physical or mechanical anchorage device for keeping said first free wall end part and said second free wall end part locked together or simply held in closing contact with each other.

Such additional physical and mechanical anchorage devices that are excluded from the one-piece rosette include one or more of adhesive means, snap fittings and locking means.

The term "ring-shaped main body" shall not be construed as limited to circular main bodies. For example oval or polygonal main bodies are also within the scope of the present claims, provided the transformation from "pre-mounting state" to the "mounted state" is still possible.

The proper materials for the one-piece rosette of the present invention are the materials that allows this transformation to take place without negatively affecting the aesthetic appearance of the one-piece rosette in the mounted state, and without the one-piece rosette is given an undesired deformation that cannot be corrected and remedied appropriately to avoid visual impairment of the rosette in said mounted state. The proper materials for the one-piece rosette are the materials that does not negatively affect the shape-memory of the ring-shaped main body obtained by the tensioning of the opposite free wall end parts against each other so that the one-piece rosette still can be arranged in the mounted state after the free wall end parts have been axially spaced apart in the intermediate step. The materials and designs of the one-piece rosette according to the present invention is thus selected to provide the one-piece rosette with a certain shape memory that, at least to some extent in some embodiments, and entirely in other embodiments after having been transformed in the intermediate state, is reassumed in the mounted state in which the first free wall end part and the second free wall end part overlap closely, thus self-locks the temporarily induced gap, and wherein the one-piece rosette at the end of the mounting process surrounds the tubular structure.

The additional physical and/or mechanical anchorage devices that are specifically excluded from the one-piece rosette include one or more of adhesive means, snap fittings and locking means, and any circumferential or axial protrusion from the ring-shaped main body. Such physical and/or mechanical anchorage devices are not part of the present one-piece rosette and one-piece rosettes having physical and/or mechanical anchorage devices are disclaimed.

The ring-shaped main body can advantageously be made of a material that can be spring-tensioned.

For example can the one-piece rosette be made of a ring-shaped band of metal, which band has a length that is longer than the perimeter at the base of the one-piece rosette in the mounted state.

Such a metal band can conveniently have spring properties.

In preferred embodiments the ring-shaped main body can be made of spring steel or polyoxymethylen (POM).

The position and degree of overlap of the first free wall end part and the second free wall end part in relation to the central axis of the one-piece rosette, and in relation to each other may, may within the scope of the present invention vary in accordance with different preferred embodiments.

For example can the configuration of the one-piece rosette be the same in the pre-mounting state and the mounted state.

The first free wall end part and the second free wall end part are configured to overlap in contact with each other in the mounted state of the rosette, however prior to being arranged in tension the first free wall end part and the second free wall end part can be configured to overlap without direct contact in which case a great tension is induced at overlap of the opposite free wall end parts when their axial order is reversed. If the first free wall end part and the second free wall end part are configured to overlap in contact prior to the overlap being tensioned by reversal of the axial order, a smaller tension is achieved.

When the free wall end parts overlap, the overlap results in application of radial force component(s) in the direction towards the tubular structure to close the central opening about said central opening, as well as the overlapping parts of the free wall end parts tend to hold together in tension due to radial and axial force components.

Due to the transformation that took place in the intermediate state where the first free wall end part and the second free wall end part were urged apart to open the gap between said free wall end parts, said overlapping free wall end parts inherently return towards each other in the mounted state thereby constituting an inherent lock or closing without invading the material of the circumferential wall, e.g. by using screws, adhesives, clamps or snap-couplings or by using any other physical and/or mechanical anchoring devices.

Accordingly, the one-piece rosette is adapted and configured to be transformable and deformable to a certain extent so that the circumferential wall of the one-piece rosette during the intermediate state can be deformed from the pre-mounting state into the intermediate state to increase the distance between the first free wall end part and the second free wall end part sufficiently to arrange the circumferential wall around the tubular structure and subsequently by itself automatically reversing this transformation and deformation and place the free wall end parts in overlapping relationship in the mounted state, preferably in the same overlapping relationship as prior to being deformed or transformed.

To allow this transformation and deformation to be carried out, the one-piece rosette may, as also stated above, be of a material that is sufficiently bendable and flexible to allow for said transformation and deformation to take place without initiating and occurrence of breaking or rupturing of the circumferential wall.

In the intermediate mounting state the first free wall end part and the second free wall end part can be spaced apart along the central axis of the one-piece rosette thereby increasing the axial distance between said free wall end parts, contrary to completely or substantially enlarging the gap by spreading the free wall end parts apart in a purely circumferential plane so as to just increasing the length of the overall perimeter of the ring-shaped main body. In the present invention the oversize of the gap between the free wall end parts in the intermediate mounting state are in the main done by spreading the free wall end parts axially along the central axis of the one-piece rosette and thereby arranging the first free wall end part axially above the second free wall end part. In the present context the term "above" is meant to refer to the distance from the perimeter of the circumferential wall, which e.g. means that when the such deformed circumferential wall is in the intermediate mounting state for being placed on the tubular structure the first free wall end part is farthest away from the base structure. However emphasis is made that the terms "first" and "second" are selected only for the use of the present application and to designate the opposite free wall end parts. The free first wall end part can quite as well be the free second wall end part.

Accordingly, in the intermediate mounting state the first free wall end part and the second free wall end part can be made spaced apart to provide a gap sized to arrange the tube in the central opening.

In the specific embodiment wherein the tubular structure is a pipe rising from a hole in the floor the first free wall end part can be the free wall end part above the floor in both the pre-mounting state and the intermediate mounting state.

In the mounted state wherein the first free wall end part also overlap the second free wall end part, the first free wall end part may be below the second free wall end part, in which case the first free wall end part can be the end of the circumferential wall in contact with the base structure. Thus in the mounted state the axial order of the overlapping free wall end parts can be reversed from the positions in the pre-mounting state, in which pre-mounting state the first free wall end part was on top of the second free wall end part or at least axially above the first free wall end part.

The axial arrangement and order of the first free wall end part and the second free wall end part can be the same in both the pre-mounting state and the mounted state.

Accordingly, in both the pre-mounting state and the mounted state the first free wall end part overlaps the second free wall end part so that the first free wall end part is above the second free wall end part, or alternatively in both the pre-mounting state and the mounted state the first free wall end part overlaps the second free wall end part so that the second free wall end part is above the first free wall end part.

The radial extent of the tensioned overlap between the first free wall end part and the second free wall end part may decrease from the outer wall perimeter of the ring-shaped main body towards the central opening whereby the central opening of the one-piece rosette becomes easy to open sufficiently to pass the one-piece rosette onto the tubular structure and subsequently close the one-piece rosette neatly as a collar around said tubular structure, e.g. due to inherent shape memory of the ring-shaped main body.

The thickness of the circumferential wall is preferably so small that the combined thickness at the overlapping areas of the circumferential wall is as low as possible. The appropriate thickness of the circumferential wall may be relevant in order to provide the one-piece rosette with the necessary proper transformation properties and to preserve any shape resulting from a structural, dimensional transformation when needed to go through the transformations of the various states during mounting. The proper thickness is selected to allow the distance between the free wall end parts to be flexed to increase the distance between said free wall end parts during the transformation and deformation of the intermediate mounting state, so as to allow the tubular structure to pass between said spaced apart free wall end parts. The selected material and the thickness of the circumferential wall should also have a structural integrity in the mounted state that allows the one-piece rosette to stand by itself around the tubular structure, so that the temporarily spaced apart free walls end parts self-lock in overlapping relationship to that any axial gap is closed and the free wall end parts tensions against each other again. When the free wall end parts overlap in the mounted state, substantially the entire perimeter of the circumferential wall may rest on the base structure, in most situations also at the overlap.

The overall preferred shape of the one-piece rosette is a frustum of a cone where the base of the frustum of the cone is defined along the perimeter, and the central opening are defined at the top of the frustum of the cone. The shape of the one-piece rosette is substantially a frustum of a cone in both the pre-mounting state and in the mounted state.

In a preferred embodiment at least one of the corners of at least one of the free wall end parts are rounded so that no sharp corners can scratch the tubular structure during mounting the one-piece rosette. The rounded corners also reduce the risk of cutting the fingers while changing the one-piece rosette's shape from the pre-mounting state into the intermediate state, as well as when the free wall end parts reassumes tensioned overlapping relationship to finally achieve the mounted state. In a preferred embodiment all corners at the edges of the free wall end parts are rounded as well as the free edges of said free wall end parts may be without sharp edges.

The second free wall end part may have a second free edge that extends via a second rounded inner corner into the perimeter of the central opening.

The rounded inner corners serve to reduce scratching the tubular structure during mounting the one-piece rosette. Another advantage is that the rounded inner corners serve to guide the first free wall end part and the second free wall end part across the tubular structure to place the one-piece rosette on the tubular structure before the tensioned free wall end parts returns towards each other into the overlapping relationship. The rounded inner corners also expedite spacing the free wall end parts apart to assume the intermediate state allowing the central opening to pass around the tubular structure, e.g. when the inner corners are forced against said tubular structure whereby the free wall end parts are spread apart, thus pressing the rounded inner corners against the tubular structure the gap increases so that the one-piece rosette assumes the intermediate state that allows the central opening to get around the tubular structure and opposite free wall end parts to instantaneously snap back into overlapping relationship of the mounted state.

The rounded inner corners thus facilitate easy mounting on the tubular structure. Furthermore the rounded inner corners expediently serve to prevent that the opposite free end wall parts and other parts of the circumferential wall deflects, or is otherwise stressed beyond what is acceptable, to preserve the self-locking function of the opposite free wall end parts due to the inherent shape-memory of the selected material and the shape memory given to the one-piece rosette by shaping, working and processing of the material build.

The first free edge may extend into the outer wall perimeter of the ring-shaped main body via a first outer corner and/or the second free edge may extends into the outer wall perimeter of the ring-shaped main body via a second outer corner so that the visual appearance gets a nice termination without sharp corners that might be grasped by dust removing devices such as brooms, cloths and mouth pieces of vacuum cleaning devices. Optionally both said first outer corner and said second outer corner are rounded, e.g. along a section of a circle.

The diameter of the central opening in the mounted state may be selected to be smaller than the exterior diameter of the tubular structure, e.g. just 0,1 mm smaller than the exterior diameter of the tubular structure. Such an embodiment applies an inherent stress to close around the tubular structure that keeps the overlap in the mounted state. Any clearance between the tubular structure and the one-piece rosette can be minimized when the one-piece rosette clamps by itself around the tubular structure.

The first inner corner and the second inner corner may be rounded in different ways along different curvatures.

For example may a first curvature of the first inner corner extend clockwise into the first free edge via a first outer transition point, and a second curvature of the second inner corner may extend counter-clockwise into the second free edge via a second outer transition point. The entire first curvature may follow a section of a circle, or the first curvature may be composed of sections of circles having different radii. A first section of the first curvature closest to the first outer transition point may e.g. have a first radius that is different from a second radius of a second section of the first curvature that extends into the central opening. The first curvature may run along further intermediate sections between the first section and the second section of the first curvature, which intermediate sections may have intermediate radii of individual radii. The first radius may e.g. be the largest radius and the second radius be the smallest, and any intermediate radius may radially reduce in length from said first radius to said second radius. The second curvature may run along sections having same or corresponding design as the first curvature, thus be designed with a second curvature of sections of first, intermediate and second radii.

The example that the first radius is larger than the second radius is not mandatory. Any curvature that provides a smooth outer or inner corner and transition at least at a first inner transition point at which the first curvature extends into the central opening, and at a second inner transition point at which the second curvature extends into the central opening, is contemplated within the scope of the present invention

The first curvature and the second curvature may advantageously converge towards each other. In case the overlap starts after the first curvature and the second curvature enter into the respective outer transition points, the distance between said transition points is reduced, and may go towards zero. Within the scope of the present invention this case may be construed as a "positive" overlap" having a "positive distance". In case the overlap starts at coincident outer transitions points the distance between said outer transition points are of course zero. In case the overlap starts before the first curvature and the second curvature reach said first outer transition point and said second outer transition point, respectively, the distance between the first outer transition point and the second outer transition point are defined within the overlap, which within the scope of the present invention may be construed as a "negative" overlap" or a "negative distance".

The first curvature and the second curvature may e.g. converge towards each other so that said first curvature and said second curvature delimit a substantially U-shaped, V-shaped or drop-shaped mounting incision that opens into the central opening and tapers towards the first outer transition point and the second outer transition point.

The first inner corner and the second inner corner may overlap at least partly, in which embodiment the overlap of the overlapping first free wall end part and second free wall end part is larger than the radial distance from the outer wall perimeter to any of the first outer transition point or the second outer transition point.

Alternatively, the first outer transition point and the second outer transition point may meet in a common point. The distance between the first outer transition point and the second outer transition point thus goes against zero and the size of the overlap of the overlapping first free wall end part and second free wall end part is smaller than in the above-described embodiment in that the radial distance from the outer wall perimeter to any of the first outer transition point or the second outer transition point is the same as the radial distance of the overlap.

In yet an alternative the first outer transition point and the second outer transition point may be at a distance from each other so that the radial distance of the overlap becomes even smaller.

The arrangement of the overlap and the first curvature and the second curvature defines the shape of the mounting incision to be forced against the tubular structure to open a gap between the tensioned opposite free wall end parts to arrive at the intermediate state and to close around the tubular structure in the mounted state when the opposite free wall end parts are free to snap back in self-closing overlapping relationship.

Smooth first and second curvatures facilitate simple snapping of said one-piece rosette onto said tubular structure, e.g. using just one hand to push open a gap at the overlap between the opposite free wall end parts when the mounting incision hits the tubular structure and is subjected to a pressure against said tubular structure. So in particular, in embodiments having rounded inner corners, it is possible to mount the one-piece rosette on the tubular structure without manually giving the ring-shaped main body space apart the opposite free end parts prior to passing the one-piece rosette onto the tubular structure. The intermediate mounting states are assumed automatically during mounting, and as soon as the obstruction by the tubular part of the gap between the opposite free wall end parts is alleviated, thus when the tubular structure is fully inside the central opening, the tensioned opposite free wall end parts return to assume the mounted state to close the temporary gap and self-lock against each other simply due to the tensioning of the overlapping opposite free wall end parts and without any additional physical and/or mechanical anchoring means, thus simply due to shape-memory.

The larger the radii the stiffer material and/or thicker material can be used for manufacturing the one-piece rosette according to the present invention.

Embodiments are contemplated within the scope of the present invention wherein prior to the one-piece rosette being configured into the pre-mounting state the overlapping first free wall end part and second free wall end part are in an initial state wherein said end parts are spaced axially apart. An initial state wherein the opposite free wall end parts conveniently are spaced axially apart are conveniently used during coating and/or painting a one-piece rosette.

The most frequent use of the one-piece rosette is as a pipe rosette for a radiator pipe wherein the base structure simply is a floor.

The invention further relates to a method of manufacturing a one-piece rosette of the kind described above.

The method includes the steps of
a) providing a flat open ring as a ring-shaped blank for manufacturing the ring-shaped main body, the flat open ring having a first free wall end part and a second free wall end part opposite the first free wall end part, and
b) processing the blank into the shape of a frustum of a cone, wherein the first free wall end part and the second free wall end part is arranged in tension in overlapping relationship.

The method may further comprise step c) of reversing the axial order of the first free wall end part and the second free wall end part so that the overlap between the first free wall end part and the second free wall end part thereby establishing or increasing the tension between the opposite free wall end parts.

In some embodiment a coating and/or painting of the frustum of a cone is done after step b). The opposite free wall end parts can then be arranged tensioned by placing one of the free wall end parts or the painted and/or coated ring-shaped main body below the other free wall end part after the coating and/or the painting has dried. The placing may e.g. involve application of a small axial pressure on the free end wall part intended to be the lowest arranged in the mounted state. This lowest free wall end part snaps below the superjacent free wall end part whereby the opposite free wall end parts now keep forcibly and close together due to their nature and tendency to return to the shape, design and structure prior to the displacing. Thus the displacement induces the tension at the overlap.

There are various ways to obtain the different temporary shapes before the one-piece rosette has its ready to use shape. One or more of for example the below steps and procedures can used:
step a) can be performed by punching,
step b) can be performed by pressing or rolling,
steps a) and b) can be performed in a common processing step,
all of steps a), b) and c) can be performed in a common processing step.

Preferably step b) provides an a ring-shaped main body with an initial spacing of the opposite free end wall parts, so that when the axial order of said opposite free end wall parts are preformed a substantial tension is created between said the opposite free end wall parts that urge to counteract this positively induced stress, thereby creating the tension at the overlap that holds the overlapping opposite free wall end parts close together. This self-locking is an inherent closing of any gap between the opposite free wall end parts due to a shape-memory that can be conferred to the one-piece rosette by shaping the ring-shaped main body with an initial deformation by means of which the opposite free wall end parts are more or less turned away from each other, thus curve slightly away from each other. Such an initial deformation of the free wall end parts away from each other to provide said free wall end part with additional spring properties can e.g. be achieved by rolling of the blank. Embodiments not having an initial deformation are within the scope of the present invention.

To summarize, the frustum-conical shape may be obtained from a flat rosette blank that is subjected to a e.g. a pressing step, a drawing step, a rolling step, or other kind of shaping step, e.g. using a mandrel or patrice, in which the circumferential wall is given at least an inclination from the central opening towards the perimeter. The diameter of the initial central opening of such a blank is larger than the diameter of the central opening of the frustum of a cone of a one-piece rosette, which latter diameter is selected in accordance with the diameter of the tubular structure the one-piece rosette is intended used for. So the diameter of the central opening of the frustum of a cone defining the one-piece rosette is smaller than the diameter of the initial central opening of the blank, and can even be slightly smaller than the diameter of the tubular structure which it shall surround in order to fit closely and clamp better around said tubular structure. So also an annular shape-memory may be present for the one-piece rosette of the present invention.

The central opening is smaller than the perimeter of the circumferential wall in any state due to the collar width, thus due to the radial width of the circumferential wall of the ring-shaped main body. The length of the perimeter of a circle taken along the perimeter of the blank is normally also longer than the length of the perimeter of the circumferential wall in the pre-mounting state and always longer than the length of the perimeter of the circumferential wall in the mounted state.

The degree of inclination may vary according to the intended use, but is always a positive inclination seen in relation to the longitudinal axis of the tubular structure, and thus also seen in relation to the central axis of the one-piece rosette. The inclination and the radial width of the one-piece rosette are two parameters relevant to the size of the hole that need to be covered. In some implementations also the available axial space above the rosette must be considered. The smaller the angle of inclination the wider a hole or clearance can be covered. The wider the circumferential wall is the wider a hole or clearance can be covered.

The size of the overlap of the free wall end parts may also depend on the annular length of the circumferential wall. The size of the overlap is preferably as small as possible so that the one-piece rosette is easy to mount and demount. An overlap of between 1 - 2 mm is acceptable and may be preferred for 12 - 15 mm diameter pipes, however larger overlaps may work better for larger pipe diameters. The above given overlap sizes should therefore not be construed as exhaustive for the one-piece rosette of the present invention.

The blank can be made from a flat metal sheet material that is machined or otherwise processed into the pre-mounting state. The one-piece rosette can also be molded into the pre-mounting state.

In case of a molded one-piece rosette, the one-piece rosette is preferably molded of a plastic polymer having transformation and deformation properties, allowing the one-piece rosette to be deformed into the intermediate state in a manner similar to as when a one-piece rosette has been punched or cut from a thin metal sheet, e.g. of spring metal, or a thin plastic sheet, e.g. of POM.

The thin sheet can also be a thin aluminium sheet or steel sheet that allows further working and processing of the blank to obtain the frustum of a cone of the one-piece rosette.

Suitable workable plastic sheets can also e.g. be a medium high density polyethylene sheet which is heat deformed from the blank state to the pre-mounting state and cured.

The named metals and plastic polymers are only examples and should not be construed as limiting the scope of the present invention. Nevertheless spring steel is highly preferred due to its springy properties that easily provides the tension, thus the biasing, of the opposite free wall end parts against each other. Furthermore spring steel is very workable and deforms easily to create the tensioned overlap.

The one-piece rosette conveniently has free wall end parts adapted to overlap slightly, such as about 1-2 mm for small diameter pipes, irrespective of which free wall end part is on top of the other.

The one-piece rosette or the blank may be surface-coated, e.g. painted, in the initial state. Coating methods include but are not limited to e.g. simple painting, spray-painting and lacquering. Other methods such as printing or electroplating are also foreseen, as well as other kinds of processing, such as polishing, embossing and application of patterns, also are contemplated. In molded plastic embodiments the bulk plastic material may be dyed rather than surface coating the one-piece rosette later to confer color to the one-piece rosette.

A further advantage of manufacturing thin one-piece rosettes, instead of e.g. heavy cast rosettes, is that the consumer may be able to customize the size, e.g. by cutting a secant piece or angular segment to promote better fitting in narrow areas.

The pipe rosettes of the present invention are thus designed to cover the gap in the wall or floor around e.g. a 12 or 15 mm radiator pipe and can be added after pipe installation to perfect and complement the room design.

The special design and construction of the one-piece rosette are the main features responsible for holding the ring-shape of the one-piece rosette around the pipe.

No special or extra locking means and anchoring means are required for the overlapping free wall end parts of the circumferential collar of the ring-shaped main body of the one-piece rosette to keep the mounted state of said one-piece rosette. Simply due to the design with overlapping wall end parts in tensioned arrangement the one-piece rosette stays where it has been placed during mounting, thus it automatically keeps the position around the tubular structure in the mounted stated and locks the free wall end parts together so that they are in close contact in a closed annular shape at the overlap.

In a preferred embodiment the free wall end parts have opposite bendings curving away from each other. The first free wall end part can thus have a first bending facing upwards towards the central opening and the second free wall end part can have a downwards bending facing toward the perimeter of the central wall in the pre-mounting state, thus away from the central opening. The curvatures of the bendings may vary. Bending degree may e.g. be about 2-5° at a bending radius of between 2 - 5 mm starting from a free wall end part.

So when the free wall end parts are brought into the pre-mounted state their axial positions are swapped or reversed axially, just as for the previously described embodiments, whereby the one-piece rosette self-locks when in the mounted state at the overlap simply due to the given design and construction.

Thus for all embodiments of the present invention the first free wall end part and the second free wall end part are configured to overlap in the mounted state of the one-piece rosette. The axial order of said first free wall end part and said second free wall end part may of may not be reversed in relation to the axial order these end parts where in, in the pre-mounting state.

The invention also suggests a solution to cover gapping around closely placed pipes by means of the one-piece rosette according to the present invention.

A cover plate may thus serve for covering a gap between two adjacent tubular structures provided with said one-piece rosettes. The cover plate may conveniently have the same thickness as the one-piece rosettes and a width corresponding to the diameter of the one-piece rosette so that a smooth surface is presented to the viewer, and so that no prominent protrusion(s) is/are exposed to be catch by cleaning tools. The cover plate may be cut to fit intimately against the opposite one-piece rosette to be inserted between those, to hide the gap in the base structure, e.g. the floor, between two tubular structures, e.g. pipes. The curvature at the opposite ends of an elongate cover inserted between two opposite one-piece rosette may conveniently be complementary of the curvature of the one-piece rosette against which the cover abut or is adjacent.

The invention also relates to a method of mounting a one-piece rosette of the above-described kind.

The method comprises the steps of
- providing the one-piece rosette,
- transforming and/or deforming the one-piece rosette from the pre-mounting state in the intermediate state,
- moving the central opening to surround the tubular structure, and
- arranging the first free wall end part and the second free wall end part in overlapping relationship to achieve the mounted state.

Preferably the first free wall end part and the second free wall is in swapped overlapping relationship in the mounted state, thus in reversed order compared to the pre-mounting state, so that the overlap is already tensioned at the overlapping free wall end parts.

In another embodiment the axial order of the first free wall end part and the second free wall end part at the overlap is not reversed and maintains as in the pre-mounting state until the one-piece rosette is about to be mounted. At that stage the user forces one free wall end part below the other free wall end part to create the tension that makes the free wall ends snap back against each other once the one-piece rosette is mounted on the tubular structure. Thus tensioning of the overlapping free wall end parts can be created by the user by reversing the axial order of said free wall end parts just prior to use, and this user-established tension is the same tension as describes above, namely the opposite forces from the forcibly deflected opposite free wall end parts on each other, which forces urge said opposite free wall end parts towards each other at any time so that said opposite free wall end parts overlap nicely and firmly, with one free wall end part on top of the other.

Above the free wall end parts are referred to and discussed as "the first free wall end part" and "the second free wall end part". This numbering should not be construed as limiting the present invention. Within the scope of the present invention the first free wall end part can quite as well appear and function as the second free wall end part; thus the person skilled in the art knows that the function and location of these free wall end parts can be reversed at the various states.

Emphasis is made that irrespective of the embodiment of the one-piece rosette of the present invention the axial order of the first free wall end part and the second free wall end part can be swapped when undertaking the transformation from the pre-mounting state to the mounting state, but it is preferred that the axial order of the first free wall end part and the second free wall end part are already in swapped tensioning in the pre-mounting state. Swapping can be done by the manufacturer and by the user depending on which product. In case of painted one-piece rosettes it may e.g. be preferred that reversal of the axial order of the opposite free wall end part, thus the swapping, is done by the user instead of by the manufacturer, so that special care can be taken by the user to avoid scratching the painting.

The first free wall end part and the second free wall end part is thus, a.o. due to special shaping and/or material properties, spring-biased against each other, in that one of the free wall end parts being arranged below the other in the pre-mounting state and in the mounted state. When the one-piece rosette is then pressed against the tubular structure the gap at the overlap opens by the very introduction of the tubular structure in between the overlapping first free wall end part and the second free wall end part, by moving the one-piece rosette crosswise the longitudinal axis of the tubular structure, e.g. a pipe, to allow the pipe enter into the central opening. As soon at the pipe not is an obstruction into this forcibly opened gap between the first free wall end part the and second free wall end part, said opposite free wall end parts are set free and automatically revert to the pre-mounting state, thus the tensioned overlapping state, which is now the mounted state. The opposite free wall end parts snap back again in same tensioned, spring-biased overlap wherein the axial and radial gap between the opposite free wall end parts is closed.

The invention will now be described with references to the accompanying drawing in which,
fig. 1 shows a fragment of a pipe rising from a fragment of a floor,
fig. 2 shows, in perspective slightly from above, a blank for a first embodiment of a one-piece rosette,
fig. 3a shows, in perspective, a first embodiment of a one-piece rosette in a pre-mounting state and manufactured of the blank seen in fig. 2,
fig. 3b shows a second embodiment of a one-piece rosette in a pre-mounting state and manufactured of the blank seen in fig. 2,
fig. 4 illustrates how the first and second embodiments of a one-piece rosette seen in figs. 3a and 3b, respectively, are being transformed from the pre-mounting state to the intermediate mounting state,
fig. 5 shows the mounted state of a one-piece rosette according to the invention, wherein the order of the opposite free wall end parts is reversed to arrange said opposite free wall end parts in tensioned overlap,
fig. 6 shows a blank for a third embodiment of a one-piece rosette,
fig. 7 shows a one-piece rosette made of the blank seen in fig. 6,
fig. 8 shows an arrangement with a cover plate between two adjacent pipes sharing a common hole in the floor, which cover plate is for being used with two one-piece pipe rosettes,
fig. 9 is a principle sketch of a fourth embodiment of a one-piece rosette seen from above visualizing the overlap,
fig. 10 shows the same seem from the side opposite the overlap of the first free wall end part and the second free wall end part,
fig. 11 shows, in enlarged scale fragmentary view, an embodiment of overlapping first inner corner and second inner corner,
fig. 12 shows, in enlarged scale fragmentary view, an embodiment of a one-piece rosette where the first outer transition point and the second outer transition point converge and meet in a common point,
Fig. 13 is an example of a curvature of an inner corner illustrating different radii at different sections of the curvature, and
Fig. 14 shows the transitions of the curvatures of the inner corners at the central opening.

Below the invention is described under the assumption that the tubular structure is a pipe rising from a floor. The pipe can however quite as well project from a wall or a ceiling or any other base, and the pipe be associated with any installation, including sanitary installation and heating systems.

The hole in the floor wherefrom the pipe rises is covered by the inclined circumferential wall of the one-piece rosette in the mounted state, so said hole cannot be seen in the figures of rosettes in mounted state.

Emphasis is made that the circumferential wall preferably is inclined. This is however not mandatory, although often preferred. Flat embodiments wherein the circumferential wall lays flat on the floor are within the scope of the present invention as long at the free wall end parts overlap in tension and a sufficient gap can be made during the intermediate state. The central opening is selected to fit closely around the pipe and the radial width of the circumferential wall is selected to span any gap between the pipe and the adjacent floor around the hole for the pipe.

The pipe is shown to have a circular cross-section. Within the scope of the present invention the rosette can be designed for tubular structures of any cross-section including squares, polygonal, oval, elliptic, etc. The initial opening of the blank and the central opening of the rosette is thus simply configured correspondingly to receive such a tubular structure and to surround this tubular structure without leaving a noticeable clearance.

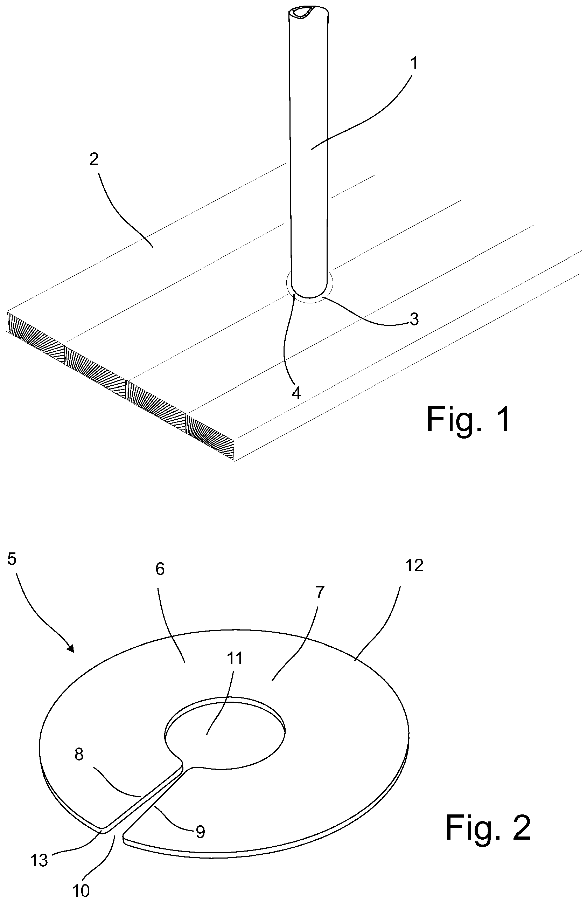

Fig. 1 shows a fragment of a pipe 1 rising from a fragment of a floor 2 via a hole 3 in said floor 2. There is a clearance 4 between the pipe 1 and the hole 3 due to the hole 3 has a diameter that is larger than the diameter for installation conveniences. This clearance 4 is intended covered by a rosette of the present invention as illustrated in the following figures.

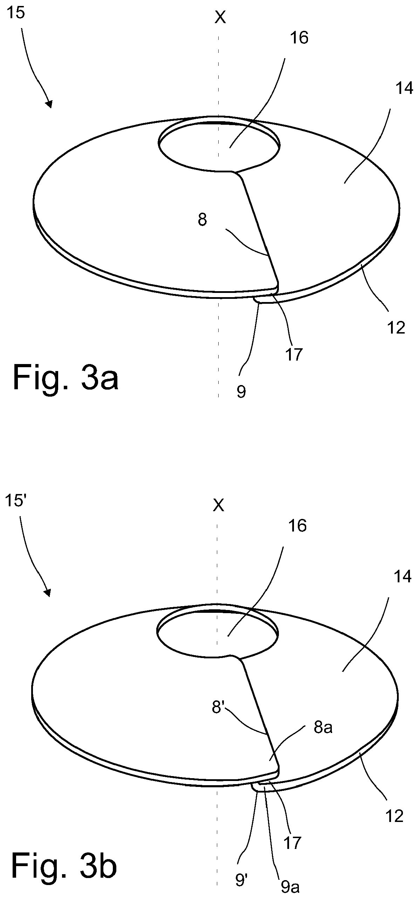

Fig. 2 shows a blank 5 for a first embodiment of such a one-piece rosette. The blank 5 is flat, and the sole structural component in the present embodiment is an open ring 6 in form of a collar 7 that has opposite facing adjacent free wall end parts 8,9 that delimit a radially extending gap 10 in the collar 7. The blank 5 has an initial central opening 11 in the same plane as the ring 6, and the corners 13 of the free wall end parts 8,9 are rounded. After further mechanical processing this open ring 6 becomes the ring-shaped main body having the shape of a frustum of a cone that constitutes the circumferential wall 14. This collar 7 of the blank 5 is made into the pre-mounting state of the rosette 15,15', of which the exemplary first embodiment of a rosette 15 and the exemplary second embodiment of a rosette 15' are seen in respective figs. 3a and 3b. For the first embodiment of a rosette 15 and for the second embodiment of a rosette 15' the same reference numerals are generally used for like parts.

In the pre-mounting states shown in figs. 3a and 3b the circumferential wall 14 has been given an inclination from a central opening 16 so that the overall shape is a frustum of a cone. Thus the central opening 16 have been raised above floor level. During this transformation from the blank 5 to the pre-mounting state the size of the initial central opening 11 has been reduced to the size of central opening 16 seen in figs. 3a and 3b.

In order to achieve the pre-mounting state of a first embodiment of a rosette 15 seen in figs. 3a the blank 5 has been, e.g. by means of rolling, given the shape of a frustum of a cone with a central opening 16, a circumferential wall 14, and having overlapping first free wall end part 8 and second free wall end part 9. The outer circumferential wall perimeter 12 is reduced corresponding to the overlap 17. The central axis of the rosette 15 is indicated by reference numeral X.

The first free wall end part 8 overlap the second free wall end part 9 so that the first free wall end part 8 is above the second free wall end part 9 in a substantially flat abutting condition. The overlapping could just as well be opposite in the pre-mounting state, so that the first free wall end part 8 is below the second free wall end part 9 instead. Because the second free wall end part 9 is forced below the first free wall end part 8 tension is created at the overlap by the opposite forces from the opposite first free wall end part 8 and second free wall end part 9 at the overlap 17. The first embodiment of a rosette 15 seen in figs. 3a is ready to be used.

In order to achieve the ready to use pre-mounting state of the second embodiment of a rosette 15' seen in fig. 3b the blank 5 has also been given a shape of a frustum of a cone with a central opening 16, a circumferential wall 14, and having overlapping tensioned first free wall end part 8' and second free wall end part 9'. The outer circumferential wall perimeter 12 is reduced corresponding to the overlap 17. The central axis of the rosette 15' is indicated by reference numeral X.

The second embodiment of a rosette 15' seen in fig. 3b however differs slightly from the first embodiment of a rosette 15 seen in fig. 3a in that the first free wall end part 8' has a small upwards bending 8a in the upwards direction of the axis X, when seen in the orientation shown in fig. 3b. Similarly the second free wall end part 9' has a small bending 9a, however a downwards bending 9a in the downwards direction of the axis X, when in the orientation shown in fig. 3b. The bending orientations of the upwards bending 8a, and the downwards bending 9a can be reversed, so that the bending of the first free wall end part 8' faces downwards and the bending of the second free wall end part 9' face upwards instead.

In a modified embodiment just one of the free wall end parts 8',9' may posses a bending. The bendings 8a,9a increase the coupling contact and coupling force at the overlap 17.

Accordingly, in any of the first embodiment 15 or the second embodiment 15' of a rosette of the present invention one free wall end part is above the other in the pre-mounting state so that the rosette 15,15' holds firmly together around the pipe 1 exclusively due to the inherent design, the construction of said rosette and the arrangement of the free wall end parts of which one have been forced below the other to create a tension and that create a shape-memory that will always urge said free wall end parts towards the least possible stressed and tensioned position and states, which is the position and state where the overlapping free wall end parts are closest to each other, although still in tension, one below the other, because the overlap is so large that the lowest free end wall part cannot escape its tension and get above the upper free end wall part. The overlapping free wall end parts could be arranged opposite in the pre-mounting state, so that the first free wall end part 8,8' is below the second free wall end part 9,9' instead

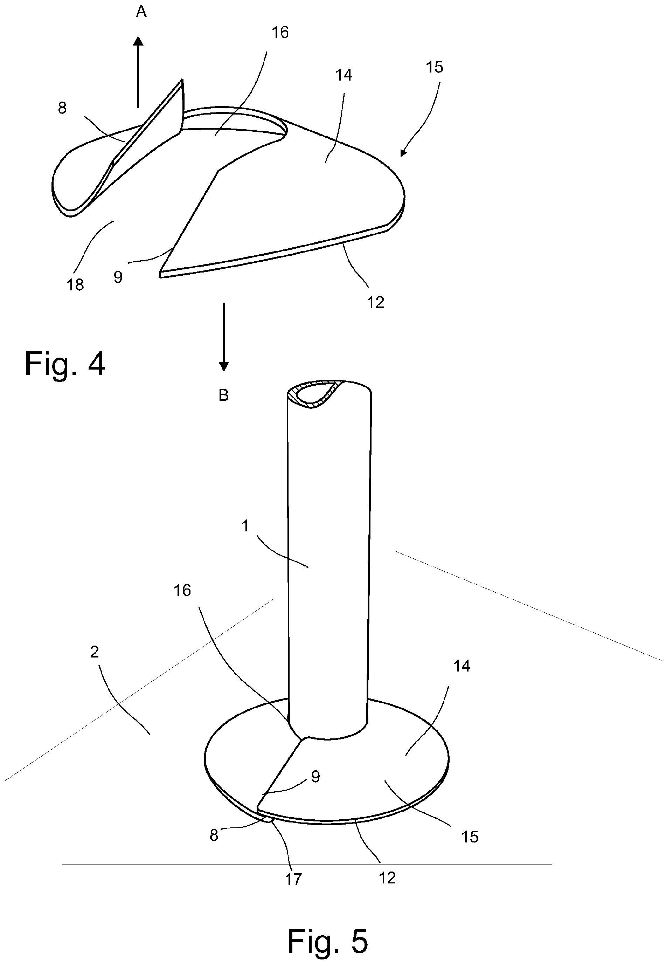

Fig. 4 shows the first embodiment of a one-piece rosette 15 seen in fig. 3a transformed in the intermediate mounting state, wherein the first free wall end part 8 and the second free wall end part 9 have been spaced apart by an introduced pipe (not shown), as indicated by opposite directed arrows A,B, to create an enlarged gap or slot 18 that provides good access to the central opening 16 to allows the one-piece rosette 15 to pass over the pipe, e.g. by a sideways movement towards and across the pipe, to assume the mounted state seen in fig. 5. It should be noted that although the pipe 1 has a free upwards facing end in fig. 1, this is only for illustrative purposes, and that in normal installation the pipe 1 is connected to another system, such as a water circulation system, a radiator, etc., which makes it impossible to pass a conventional rosette or even a closed one-piece rosette 15 over the top or on a free end of the pipe 1. The opposite free wall end parts are e.g. of the kind that has been given a curvature of the opposite wall end parts more or less away from each other by initial shaping in the initial state, such as by rolling the ring-shaped main body, thus by rolling the blank seen in fig. 2, thereby shaping the collar so that when one free wall end part are moved below the other, a higher tension is achieved at the overlap than if no curvature is provided. Which free wall end part is arranged below the other is immaterial as long as tension is obtained in the at the overlap in the pre-mounting step.

The second embodiment of a one-piece rosette 15' seen in fig. 3b is transformed in the intermediate state in a similar manner.

Fig. 5 illustrates the mounted state of any of the first embodiment of a one-piece rosette 15 or the second embodiment of a one-piece rosette 15' according to the present invention and wherein the rosette has been mounted on the pipe 1 so that the central opening 16 fits nicely around the pipe 1 and the opposite free wall end parts again overlap in tension. For the purpose of clarity of fig. 5 only the reference numeral of the first embodiment are inserted in fig. 5.

The first free wall end part 8;8' is now brought below the second free wall end part 9;9' and locks these wall end parts together so that the circumferential wall 14 now defines a closed self-locking collar 7 around the pipe 1. The shape of a frustum of a cone provides an inclination of the circumferential wall 14 from the central opening 16 towards the outer wall perimeter 12 that rests on a base structure in form of a floor 2. The inclination can e.g. be between 10° - 45° in relation to the central axis X of the rosette 15;15', and to the longitudinal axis of the pipe 1. For a 12 mm pipe the blank 5 for a rosette of the present invention may have an angular spacing between the first free wall end part and the second free wall end part of e.g. 6° to achieve an appropriate overlap in the pre-mounting state and in the mounted state. The axial order of the opposite free wall end parts may have been arranged as shown in fig. 5 under tension by the manufacturer or by the user prior to the being placed in the mounted state. Thus the opposite free wall end parts have been arranged in the pre-mounting state wherein the opposite free wall end parts have been arranged in tension at the overlap prior to being mounted on the pipe by moving the first free wall end part 8;8' in the opposite direction of the direction indicated by arrow A in fig. 4 and moving the second free wall end part 9;9' below the first free wall end part 8;8' in the direction opposite direction B in fig. 4. So the first free wall end part 8;8' is moved in direction A and the second free wall end part 9;9' is moved in direction B below the first free wall end part 8;8' so that said free wall end parts apply a force on each other that keeps the overlap under tension because the force A is directed towards the force B.

So for the second embodiment the upwards first bending 8a are brought below the downwards second bending 9a to arranging the rosette in the pre-mounting in order to provide further strength and compression force to the overlap 17 due to the now substantially straightened bendings 8a,9a attempting to counteract the force applied to them by the forces A,B against each other due to the overlap 17.

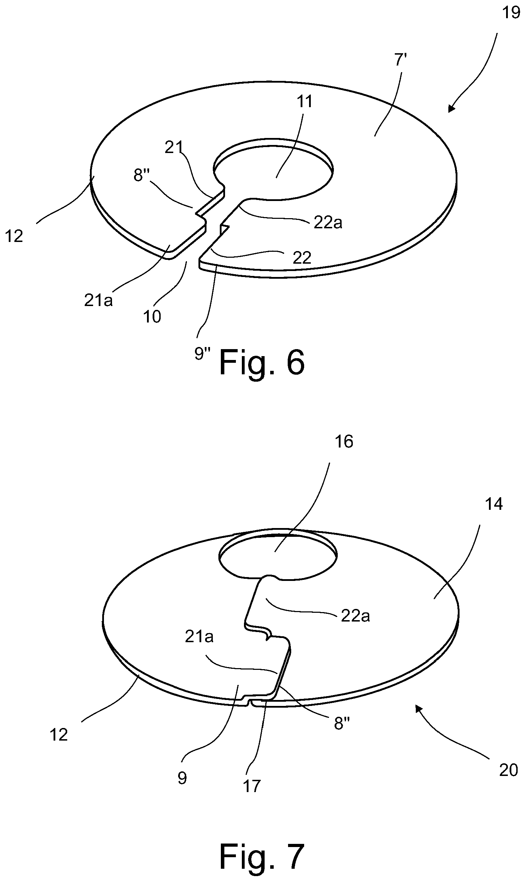

Fig. 6 shows a second embodiment of a blank 19 for a third embodiment of a one-piece rosette 20 according to the present invention, as seen in the mounted state in fig. 7.

The second embodiment of a blank 19 and the third embodiment of a rosette 20 corresponds substantially to the previously described embodiments and for like parts same reference numerals are used.

The second embodiment of a blank 19 differs from the first embodiment of a blank 5 in that the free wall end parts 8",9" have coupling incisions 21,22 so that two tensioned annular overlap are created. The first free wall end part 8" has an inner coupling incision 21 extending from the initial central opening 11 about half way into the collar 7' to define a circumferential outer flap 21a. The second free wall end part 9" has an outer coupling incision 22 that extends from the outer wall perimeter 12 of the collar 7' about half the way into the radial width of the collar 7' to define a circumferential inner flap 22a.

To lock the free wall end parts 8",9" together in overlapping relationship in achieving the tensioned mounted state seen in fig. 7 the inner flap 22a are brought above the circumferential wall 14 at the inner coupling incision 21, and the outer flap 21a is brought above the circumferential wall 14 at the outer coupling incision 22. This embodiment is less preferred because the mounting process is more complicated than for the above-mentioned embodiments.

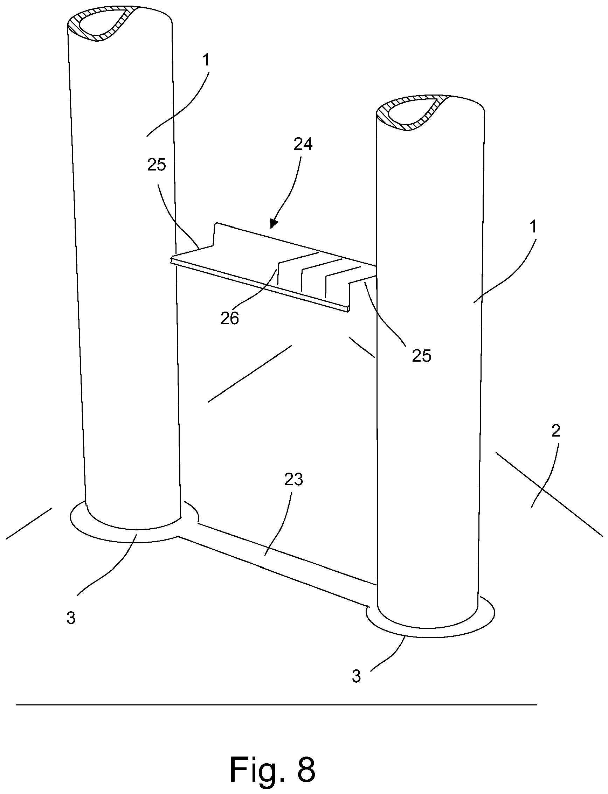

Fig. 8 shows a common pipe installation with two adjacent pipes 1 passed through holes 3 in the floor 2. The carpenter has left a disfiguring cut-out track 23, - an opening -, between the two holes 3. A cover plate 24 is provided to hide this track 23 below rosettes (not shown. The cover plate 24 has V-shaped free ends 25 and markings 26 to facilitate cutting the cover plate 24 to an appropriate length that fits between the pipes 1 so that it e.g. can be hidden below the subsequently mounted rosettes (not shown), or in the alternative be cut to fit neatly against the edge of the rosette.

In both the pre-mounting state and in the mounted state the circumferential wall 14 of the rosettes 15,15',20 posses a springy nature that provides the tensioning of the rosette around the tubular structure and the compression together of the free wall end parts at the overlap. The preferred material for the cover plate may be the same as for the one-piece rosette, including aluminium and steel, e.g. a 1 mm aluminium sheet or steel sheet, preferably spring steel. Aluminium is lightweight, easy to process, and easy to manipulate between the various states of the present invention. Also spring steel is inexpensive and can easily be given the initially curving of the opposite free wall end parts in the initial state. Spring steel can also be painted. Cutting, if needed, can often be made by a common scissor. Preferably the cover plate is so thin that the rosette is not lifted noticeable from the floor if the cover plate is below it.

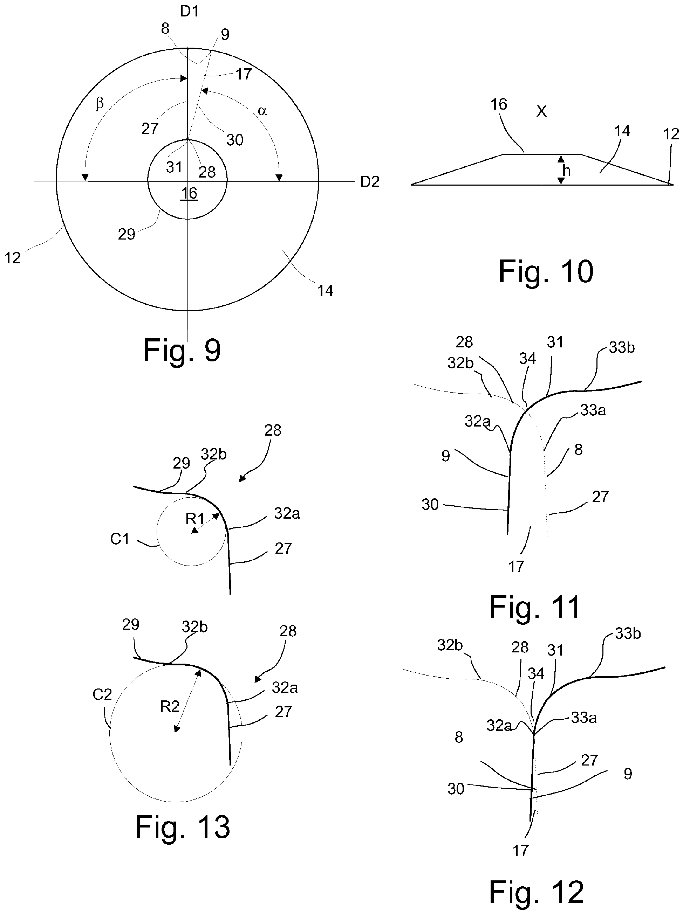

Fig. 9 is a principle sketch of a fourth embodiment of a one-piece rosette according to the present invention seen from above. In fig. 10 the same one-piece rosette shaped as a frustum of a cone is seen from the side opposite the overlapping 17 of the first free wall end part 8 and the second free wall end part 9. The fourth embodiment differs form the first embodiment seen in figs. 3a and 3b in that the axial order of the overlapping first free wall end part 8 and second free wall end part 9 is not reversed during the transformations of the intermediate state, thus from the pre-mounting state to the mounted state. The tensioned configuration of the rosette is the same in the pre-mounting state as in the mounted state The second free wall end part 9 is above the first free wall end part 8.

The ring-shaped main body acts like a spring that by itself keeps the first free wall end part 8 and second free wall end part 9 intimately together substantially as in the pre-mounting state and/or the mounted state. The first free wall end part 8 and second free wall end part 9 are spring-biased against each other by arranging one free wall end part below the other in the pre-mounting state. When the one-piece rosette is moved towards the pipe a gap at the overlap opens to allow the pipe into the central opening, but as soon at the pipe not is an obstructions into this gap the first free wall end part 8 and second free wall end part 9 snaps together again in contact with each other, in tensioned, spring-biased overlap.

Two orthogonal diameters of the one-piece rosette are indicated in fig. 9 by first diameter D1, which is vertical in fig. 9 and second diameter D2, which is horizontal in fig. 9 to illustrate that the free wall end parts overlap. The overlap constitutes a section of a circle.

The first free wall end part 8 has a first free edge 27 that extends via a first rounded inner corner 28 into the perimeter 29 of the central opening 16 at a first inner transition point 32b. The second free wall end part 9 has a second free edge 30 that extends via a second rounded inner corner 31 into the perimeter 29 of the central opening 16 at a second inner transition point 33b.

The overlap 17 is reached in that the angle α between the second diameter D2 and the first free edge 27 is smaller than the angle β between said second diameter D2 and the second free edge 30.

Fig. 11 shows schematically, in enlarged scale fragmentary view, that the overlapping first inner corner 28 and second inner corner 31 overlap to the extent of an overlap 17. In fig. 12 the size of the overlap 17 is smaller than shown in fig. 11 because the overlap 17 starts at the coincidence of a first outer transition point 32a of the first inner corner 28 into the first free edge 27 and a second outer transition point 33a of the second inner corner 31 into the second free edge 30. Thus the curvatures of the rounded inner corners 28,31 converge and meet in a common point substantially being the coincident point of the first outer transition point 32a and the second outer transition point 33a.

Both the embodiments of overlap shown schematically in figs. 11 and 12, respectively, are examples, and the size and shape of the mounting incision 34 between the first inner corner 28 and second inner corner 31 may vary depending on the amount of overlap 17 and of the path of the first curvature and second curvature. Said mounting incision 34 can e.g. be steeper than exemplified in fig. 12, and wider than exemplified in fig. 11.

Fig. 13 illustrates, purely as an example, that the first rounded inner corner 28 can have a first curvature divided in sections of circles of which the section of a circle C1 closest to the first outer transition point 33a has a smaller radius R1 than the section of a circle C2 closest to the central opening 16.

The second rounded inner corner 31 may have a second curvature similar to the first curvature but the second curvature can also be different from the first curvature to provide an asymmetrical mounting incision 34.

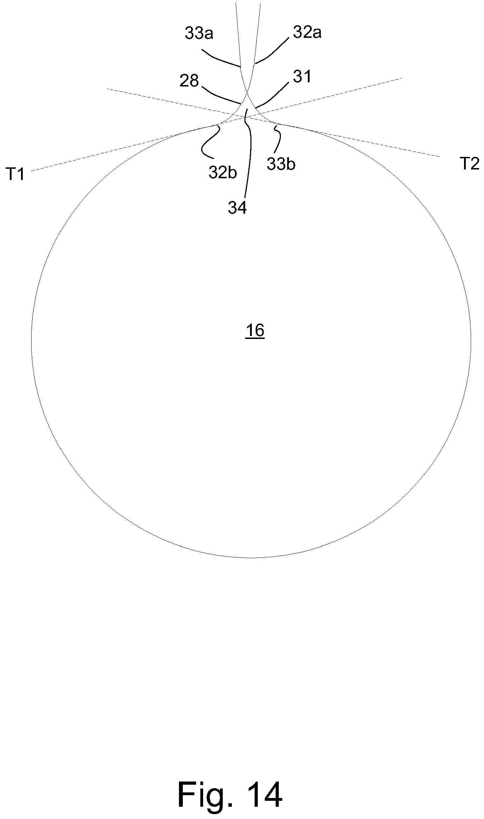

Fig. 14 shows, in enlarged scale view, in an exemplary embodiment, that the transition of the first curvature of the first inner corner 28 extends into the central opening 16 via a first inner transition point 32b and that the second curvature of the second inner corner 31 extends into the central opening 16 via a second inner transition point 33b to create a "negative overlap", where the circumferential order of the first outer transition point 32a and the second outer transition point 33a has been reversed in relation to the circumferential order of the first inner transition point 32b and the second inner transition point 33b. A "negative distance" between said outer transition points 32a,32b is obtained, and thus the drop-shaped incision 34.

As stated above the positions of the inner and outer transition point may vary depending on the selected amount of overlap. In one embodiment the first inner corner and the second inner corner may overlap completely.

A first tangent T1 to a circular central opening 16 extends through first inner transition point 32b and intersects a second tangent T2 to said circular central opening 16, which second tangent T2 extends through the second inner transition point 33b.

Thus the tangents T1 and T2 intersect in the incision 34 to thereby provide a one-piece rosette that has first and second curvatures suited for easy and expedient mounting of the one-piece rosette on a tubular structure, such as e.g. a radiator pipe used in heating installations in e.g. domestic buildings.

A preferred one piece-rosette of the present invention is made of spring-steel, has the shape of a frustum of a cone, a drop-shaped mounting incision, and overlapping opposite free wall end parts, the order of which is arranged to obtain maximum tension, thus the opposite free wall ends parts apply a force against each other due to inherent and given shape-memory, e.g. due to the free wall end parts in the initial state are bend away from each other, so that when the axial order is reversed, these end parts are inherently forced against each other to close any axial gap.

## Claims

1. A one-piece rosette (15;15';20) comprising a ring-shaped main body (6) adapted to be detachably mounted around a tubular structure (1) which projects from a base structure (2), the ring-shaped main body (6) has
- a circumferential wall (14) with a radial width between a central opening (16) and an outer wall perimeter (12),
- a first free wall end part (8;8';8") and a second free wall end part (9;9';9") opposite the first free wall end part (8;8';8"),
- which first free wall end part (8;8';8") and second free wall end part (9;9';9") is arranged in overlapping relationship,
- the opposite first free wall end part (8;8';8") and second free wall end part (9;9';9") are flexible to and from each other in relation to the central axis (X) of the one-piece rosette, and
- the overlap between the first free wall end part (8;8';8") and the second free wall end part (9;9';9") is self-locking by being arranged in tension against each other,
**characterized in that**
- the first free wall end part (8;8';8") has a first free edge (27) that extends via a first rounded inner corner (28) into the inner perimeter (29) of the central opening (16).

2. A one-piece rosette (15;15';20) according to claim 1, **characterized in that** the opposite free wall end parts (8;8';8";9;9';9") are held together around the tubular structure by a tension force at the overlap of the annularly overlapping opposite free wall end parts (8;8';8";9;9';9") without physical and mechanical anchoring means.

3. A one-piece rosette (15;15';20) according to claim 2, **characterized in that** the physical and/or mechanical anchorage devices that are excluded from the one-piece rosette includes one or more of adhesive means, snap fittings and locking means.

4. A one-piece rosette (15;15';20) according to any of the preceding claims 1, 2 or 3, **characterized in that** the free wall end parts (8,9;8'9';8",9") have opposite bendings (8a,9a) curving away from each other along the center axis (X) at least in a pre-mounted state.

5. A one-piece rosette (15;15';20) according to any of the preceding claims 1 - 4, **characterized in that** the ring-shaped main body (6) is made of a material that can be or is spring-tensioned, preferably the one-piece rosette (15;15';20) is made of a a ring-shaped band metal band having spring properties, which band has a length that is longer than the perimeter at the base of the one-piece rosette (15;15';20) in a mounted state.

6. A one-piece rosette (15;15';20) according to any of the preceding claims 1 - 5, **characterized in that** the shape of the one-piece rosette (15;15';20) in the mounted state is a frustum of a cone.

7. A one-piece rosette (15;15';20) according to any of the preceding claims 1 - 6, **characterized in that** the second free wall end part (9;9';9") has a second free edge (30) that extends via a second rounded inner corner (31) into the inner perimeter of the central opening (16).

8. A one-piece rosette (15;15';20) according to claims 1 - 7, **characterized in that** the first free edge (27) extends into the outer wall perimeter (12) of the ring-shaped main body (6) via a first outer corner (28), optionally said first outer corner (28) is rounded, and/or the second free edge (30) extends into the outer wall perimeter (12) of the ring-shaped main body (6) via a second outer corner (31), optionally said second outer corner (31) is rounded.

9. A one-piece rosette (15;15';20) to any of the preceding claims 1 - 8, **characterized in that** a first curvature of the first inner corner (28) extends into the first free edge (27) via a first outer transition point (32a), and a second curvature of the second inner corner (31) extends into the second free edge (30) via a second transition point (33a), preferably the first curvature and the second curvature converge towards each other so that said curvatures delimit a substantially U-shaped, V-shaped or drop-shaped mounting incision (34) that opens into the central opening (16) and tapers towards the first transition point (32a) and the second transition point (33a) .

10. A one-piece rosette (15;15';20) according to any of the preceding claims 1 - 9, **characterized in that** the first inner corner (28) and the second inner corner (31) overlap at least partly.

11. A one-piece rosette (15;15';20) according to any of the preceding claims 1 - 10, **characterized in that** the one-piece rosette (15;15';20) is a one-piece rosette (15;15';20) for a radiator pipe (1) and the base structure is a floor (2), wall or ceiling.

12. A method of manufacturing a one-piece rosette (15;15';20) according to any of the preceding claims 1 - 11, **characterized in that** the method includes the steps of
a) providing a flat open ring as a ring-shaped blank for manufacturing the ring-shaped main body (6), the flat open ring having a first free wall end part (8;8';8") and a second free wall end part (9;9';9") opposite the first free wall end part (8;8';8"), and
b) processing the blank into the shape of a frustum of a cone, wherein the first free wall end part (8;8';8") and the second free wall end part (9;9';9") is arranged in tension in overlapping relationship.

13. A method of manufacturing a one-piece rosette (15;15';20) according to claim 12, **characterized in that** the method further comprises step c) of reversing the axial order of the first free wall end part (8;8';8") and the second free wall end part (9;9';9").

14. A kit comprising the one-piece rosette (15;15';20) according to any of the preceding claims 1 - 11, and a cover plate (24) for covering a gap (23) between two adjacent tubular structures (1) provided with said one-piece rosettes (15;15';20).

15. A method of mounting a one-piece rosette (15;15';20) according to any of the preceding claims 1 - 11 on a tubular structure, **characterized in that** the method comprises the steps of
- providing the one-piece rosette (15;15';20),
- increasing the gap (10,18) between the opposite free wall end parts (8,8',8";9,9',9") and moving the central opening (16) to surround the tubular structure (1), and
- arranging the first free wall end part (8;8';8") and the second free wall end part (9;9';9") in overlapping relationship.

## Patentansprüche

1. Eine einteilige Rosette (15; 15'; 20) umfassend einen ringförmigen Hauptkörper (6), der angepasst ist, um abnehmbar um eine rohrförmige Struktur (1) herum montiert zu werden, die von einer Basisstruktur (2) vorsteht, wobei der ringförmige Hauptkörper (6) aufweist
- eine umlaufende Wand (14) mit einer radialen Breite zwischen einer zentralen Öffnung (16) und einem Außenwandumfang (12),
- ein erstes freies Wandendteil (8; 8'; 8") und ein zweites freies Wandendteil (9; 9'; 9") gegenüber dem ersten freien Wandendteil (8; 8'; 8"),
- wobei das erste freie Wandendteil (8; 8'; 8") und das zweite freie Wandendteil (9; 9'; 9") in überlappender Beziehung angeordnet sind,
- das gegenüberliegende erste freie Wandendteil (8; 8'; 8") und das zweite freie Wandendteil (9; 9'; 9'') in Bezug auf die Mittelachse (X) der einteiligen Rosette zueinander und voneinander flexibel sind, und
- die Überlappung zwischen dem ersten freien Wandendteil (8; 8'; 8") und dem zweiten freien Wandendteil (9; 9'; 9'') selbsthemmend ist, indem sie gegeneinander unter Spannung angeordnet sind,
**dadurch gekennzeichnet, dass**
- das erste freie Wandendteil (8;8';8") eine erste freie Kante (27) aufweist, die sich über eine erste abgerundete Innenecke (28) in den inneren Umfang (29) der zentralen Öffnung (16) erstreckt.

2. Eine einteilige Rosette (15; 15'; 20) nach Anspruch 1, **dadurch gekennzeichnet, dass** die gegenüberliegenden freien Wandendteile (8; 8'; 8"; 9; 9'; 9'') um die rohrförmige Struktur herum durch eine Zugkraft an der Überlappung der ringförmig überlappenden gegenüberliegenden freien Wandendteile (8; 8'; 8"; 9; 9'; 9'') ohne physikalische und mechanische Verankerungsmittel zusammengehalten werden.

3. Eine einteilige Rosette (15; 15'; 20) nach Anspruch 2, **dadurch gekennzeichnet, dass** die physikalischen und/oder mechanischen Verankerungsvorrichtungen, die von der einteiligen Rosette ausgeschlossen sind, eine oder mehrere von Klebemitteln, Schnappbeschlägen und Verriegelungsmitteln enthalten.

4. Eine einteilige Rosette (15; 15'; 20) nach einem der vorstehenden Ansprüche 1, 2 oder 3, **dadurch gekennzeichnet, dass** die freien Wandendteile (8, 9; 8' 9'; 8", 9") zumindest in vormontiertem Zustand entgegengesetzte, entlang der Mittelachse (X) voneinander weg gekrümmte Biegungen (8a, 9a) aufweisen.

5. Ein einteilige Rosette (15; 15'; 20) nach einem der vorstehenden Ansprüche 1 - 4, **dadurch gekennzeichnet, dass** der ringförmige Hauptkörper (6) aus einem Material besteht, das federnd gespannt werden kann oder gespannt ist, vorzugsweise die einteilige Rosette (15; 15'; 20) aus einem ringförmigen Band Metallband mit Federeigenschaften besteht, wobei das Band eine Länge aufweist, die länger als der Umfang an der Basis der einteiligen Rosette (15; 15'; 20) in montiertem Zustand ist.

6. Eine einteilige Rosette (15; 15'; 20) nach einem der vorhergehenden Ansprüche 1-5, **dadurch gekennzeichnet, dass** die Form der einteiligen Rosette (15; 15'; 20) im montierten Zustand ein Kegelstumpf ist.

7. Eine einteilige Rosette (15; 15'; 20) nach einem der vorhergehenden Ansprüche 1-6, **dadurch gekennzeichnet, dass** das zweite freie Wandendteil (9; 9'; 9") eine zweite freie Kante (30) aufweist, die sich über eine zweite abgerundete Innenecke (31) in den inneren Umfang der zentralen Öffnung (16) erstreckt.

8. Eine einteilige Rosette (15; 15'; 20) nach den Ansprüchen 1-7, **dadurch gekennzeichnet, dass** sich die erste freie Kante (27) über eine erste Außenecke (28) in den Außenwandumfang (12) des ringförmigen Hauptkörpers (6) erstreckt, wobei wahlweise die erste Außenecke (28) abgerundet ist, und/oder die zweite freie Kante (30) sich über eine zweite Außenecke (31) in den Außenwandumfang (12) des ringförmigen Hauptkörpers (6) erstreckt, wobei wahlweise die zweite Außenecke (31) abgerundet ist.

9. Eine einteilige Rosette (15; 15'; 20) nach einem der vorhergehenden Ansprüche 1 - 8, **dadurch gekennzeichnet, dass** sich eine erste Krümmung der ersten Innenecke (28) über einen ersten äußeren Übergangspunkt (32a) in die erste freie Kante (27) erstreckt, und dass sich eine zweite Krümmung der zweiten Innenecke (31) über einen zweiten Übergangspunkt (33a) in die zweite freie Kante (30) erstreckt, vorzugsweise die erste Krümmung und die zweite Krümmung aufeinander zu konvergieren, so dass die Krümmungen einen im Wesentlichen U-förmigen, V-förmigen oder tropfenförmigen Montageeinschnitt (34) begrenzen, der sich in die zentrale Öffnung (16) öffnet und sich zum ersten Übergangspunkt (32a) und zum zweiten Übergangspunkt (33a) hin verjüngt.

10. Eine einteilige Rosette (15; 15'; 20) nach einem der vorhergehenden Ansprüche 1-9, **dadurch gekennzeichnet, dass** die erste Innenecke (28) und die zweite Innenecke (31) sich zumindest teilweise überlappen.

11. Eine einteilige Rosette (15; 15'; 20) nach einem der vorhergehenden Ansprüche 1-10, **dadurch gekennzeichnet, dass** die einteilige Rosette (15; 15'; 20) eine einteilige Rosette (15; 15'; 20) für ein Heizkörperrohr (1) ist und die Grundstruktur ein Boden (2), eine Wand oder eine Decke ist.

12. Ein Verfahren zur Herstellung einer einteiligen Rosette (15; 15'; 20) nach einem der vorhergehenden Ansprüche 1 - 11, **dadurch gekennzeichnet, dass** das Verfahren die folgenden Schritte enthält
a). Bereitstellen eines flachen offenen Rings als ringförmiger Rohling zur Herstellung des ringförmigen Hauptkörpers (6), wobei der flache offene Ring ein erstes freies Wandendteil (8; 8'; 8") und ein zweites freies Wandendteil (9; 9'; 9'') gegenüber dem ersten freien Wandendteil (8; 8'; 8") aufweist, und
b) Bearbeiten des Rohlings in die Form eines Kegelstumpfes, wobei das erste freie Wandendteil (8; 8'; 8") und das zweite freie Wandendteil (9; 9'; 9'') unter Spannung in überlappender Beziehung angeordnet sind.

13. Ein Verfahren zur Herstellung einer einteiligen Rosette (15; 15'; 20) nach Anspruch 12, **dadurch gekennzeichnet, dass** das Verfahren ferner den Schritt c) der Umkehrung der axialen Reihenfolge des ersten freien Wandendteils (8; 8'; 8") und des zweiten freien Wandendteils (9; 9'; 9") umfasst.

14. Ein Bausatz, der die einteilige Rosette (15; 15'; 20) nach einem der vorhergehenden Ansprüche 1 - 11 und eine Abdeckplatte (24) zum Abdecken eines Spalts (23) zwischen zwei benachbarten rohrförmigen Strukturen (1), die mit den einteiligen Rosetten (15; 15'; 20) versehen sind, umfasst.

15. Ein Verfahren zur Montage einer einteiligen Rosette (15; 15'; 20) nach einem der vorstehenden Ansprüche 1 - 11 auf einer rohrförmigen Struktur, **dadurch gekennzeichnet, dass** das Verfahren die folgenden Schritte umfasst
- Bereitstellen der einteiligen Rosette (15;15';20),
- Vergrößern des Spalts (10, 18) zwischen den gegenüberliegenden freien Wandendteilen (8, 8', 8"; 9, 9', 9") und Verschieben der zentralen Öffnung (16), um die rohrförmige Struktur (1) zu umgeben, und
- Anordnen des ersten freien Wandendteils (8; 8'; 8") und des zweiten freien Wandendteils (9; 9'; 9'') in überlappender Beziehung.

## Revendications

1. Rondelle réalisée en une seule pièce (15 ; 15' ; 20) comprenant un corps principal (6) possédant une configuration de forme annulaire, conçu pour être monté de manière amovible autour d'une structure tubulaire (1) qui fait saillie à partir d'une structure de base (2), le corps principal (6) possédant une configuration de forme annulaire possédant :
- une paroi circonférentielle (14) comprenant une largeur radiale entre une ouverture centrale (16) et un périmètre de paroi externe (12) ;
- une première partie terminale de paroi libre (8 ; 8' ; 8") et une seconde partie terminale de paroi libre (9 ; 9' ; 9") opposée à la première partie terminale de paroi libre (8 ; 8' ; 8") ;
- ladite première partie terminale de paroi libre (8; 8' ; 8") et ladite seconde partie terminale de paroi libre (9 ; 9' ; 9") étant disposées dans une relation de chevauchement réciproque ;
- la première partie terminale de paroi libre (8; 8'; 8") et la seconde partie terminale de paroi libre (9 ; 9' ; 9") opposées manifestent une flexibilité réciproque via un mouvement de va-et-vient par rapport à l'axe central (X) de la rondelle réalisée en une seule pièce ; et
- le chevauchement entre la première partie terminale de paroi libre (8 ; 8' ; 8") et la seconde partie terminale de paroi libre (9 ; 9' ; 9") est du type autoverrouillant par le fait qu'il est conçu pour imprimer à une partie une tension par rapport à l'autre partie ;
**caractérisée en ce que**
- la première partie terminale de paroi libre (8 ; 8' ; 8") possède un premier bord libre (27) qui s'étend par l'intermédiaire d'un premier coin interne arrondi (28) jusque dans le périmètre interne (29) de l'ouverture centrale (16).

2. Rondelle réalisée en une seule pièce (15; 15'; 20) selon la revendication 1, **caractérisée en ce que** les parties terminales de parois libres opposées (8; 8'; 8"; 9; 9'; 9") sont maintenues ensemble autour de la structure tubulaire par l'intermédiaire d'une force de tension qui s'exerce au niveau du chevauchement des parties terminales de parois libres opposées (8 ; 8' ; 8" ; 9 ; 9' ; 9") qui se chevauchent en une configuration annulaire, en l'absence de moyens d'ancrage de type physique et de type mécanique.

3. Rondelle réalisée en une seule pièce (15; 15'; 20) selon la revendication 2, **caractérisée en ce que** les dispositifs d'ancrage de type physique et/ou de types mécanique qui sont exclus de la rondelle réalisée en une seule pièce englobent un ou plusieurs moyens choisis parmi des moyens adhésifs, des raccords par encliquetage et des moyens de verrouillage.

4. Rondelle réalisée en une seule pièce (15 ; 15' ; 20) selon l'une quelconque des revendications précédentes 1, 2 ou 3, **caractérisée en ce que** les parties terminales de parois libres (8 ; 8' ; 8" ; 9 ; 9' ; 9") possèdent des courbures opposées (8a, 9a) qui s'écartent l'une de l'autre en s'incurvant le long de l'axe central (X) au moins dans un état prémonté.

5. Rondelle réalisée en une seule pièce (15 ; 15' ; 20) selon l'une quelconque des revendications précédentes 1 à 4, **caractérisée en ce que** le corps principal (6) possédant une configuration de forme annulaire est réalisé à partir d'un matériau qui est soumis à une précontrainte par ressort ou qui peut être soumis à une telle précontrainte ; de préférence, la rondelle réalisée en une seule pièce (15 ; 15' ; 20) est réalisée à partir d'une bande métallique sous la forme d'une bande de configuration annulaire possédant des propriétés élastiques, ladite bande possédant une longueur qui est supérieure au périmètre à la base de la rondelle réalisée en une seule pièce (15 ; 15' ; 20) dans un état monté.

6. Rondelle réalisée en une seule pièce (15 ; 15' ; 20) selon l'une quelconque des revendications précédentes 1 à 5, **caractérisée en ce que** la configuration de la rondelle réalisée en une seule pièce (15 ; 15' ; 20) à l'état monté est celle du tronc d'un cône.

7. Rondelle réalisée en une seule pièce (15 ; 15' ; 20) selon l'une quelconque des revendications précédentes 1 à 6, **caractérisée en ce que** la seconde partie terminale de paroi libre (9 ; 9' ; 9") possède un second bord libre (30) qui s'étend par l'intermédiaire d'un second coin interne arrondi (31) jusque dans le périmètre interne de l'ouverture centrale (16).

8. Rondelle réalisée en une seule pièce (15 ; 15' ; 20) selon l'une quelconque des revendications précédentes 1 à 7, **caractérisée en ce que** le premier bord libre (27) s'étend jusque dans le périmètre de paroi externe (12) du corps principal (6) possédant une configuration de forme annulaire par l'intermédiaire d'un premier coin externe (28) ; de manière facultative, ledit premier coin externe (28) est arrondi ; et/ou le second bord libre (30) s'étend jusque dans le périmètre de paroi externe (12) du corps principal (6) possédant une configuration de forme annulaire par l'intermédiaire d'un second coin externe (31) ; de manière facultative, ledit second coin externe (31) est arrondi.

9. Rondelle réalisée en une seule pièce (15 ; 15' ; 20) selon l'une quelconque des revendications précédentes 1 à 8, **caractérisée en ce qu'**une première courbure du premier coin interne (28) s'étend jusque dans le premier bord libre (27) par l'intermédiaire d'un premier point de transition externe (32a) et une seconde courbure du second coin interne (31) s'étend jusque dans le second bord libre (30) par l'intermédiaire d'un second point de transition (33a) ; de préférence, la première courbure et la seconde courbure convergent en direction l'une de l'autre d'une manière telle que lesdites courbures délimitent une incision de montage (34) possédant essentiellement une configuration en forme de U, en forme de V ou en forme de goutte, qui s'ouvre dans l'ouverture centrale (16) et qui se rétrécit dans la direction du premier point de transition (32a) et du second point de transition externe (33a).

10. Rondelle réalisée en une seule pièce (15 ; 15' ; 20) selon l'une quelconque des revendications précédentes 1 à 9, **caractérisée en ce que** le premier coin interne (28) et le second coin interne (31) se chevauchent au moins en partie.

11. Rondelle réalisée en une seule pièce (15 ; 15' ; 20) selon l'une quelconque des revendications précédentes 1 à 10, **caractérisée en ce que** la rondelle réalisée en une seule pièce (15 ; 15' ; 20) représente une rondelle réalisée en une seule pièce (15 ; 15' ; 20) destinée à un tuyau de radiateur (1) et la structure de base représente un plancher (2), un mur ou un plafond.

12. Procédé de fabrication d'une rondelle réalisée en une seule pièce (15; 15'; 20) selon l'une quelconque des revendications précédentes 1 à 11, **caractérisé en ce que** le procédé englobe les étapes consistant à :
a) procurer un anneau ouvert plat à titre d'ébauche possédant une configuration de forme annulaire pour la fabrication du corps principal (6) possédant une configuration de forme annulaire, l'anneau ouvert plat possédant une première partie terminale de paroi libre (8; 8'; 8") et une seconde partie terminale de paroi libre (9 ; 9' ; 9") opposée à la première partie terminale de paroi libre (8 ; 8' ; 8"); et
b) traiter l'ébauche pour obtenir la configuration du tronc d'un cône ; dans lequel la première partie terminale de paroi libre (8 ; 8' ; 8") et la seconde partie terminale de paroi libre (9 ; 9' ; 9") sont disposées en étant soumise à une tension dans une relation de chevauchement réciproque.

13. Procédé de fabrication d'une rondelle réalisée en une seule pièce (15 ; 15' ; 20) selon la revendication 12, **caractérisé en ce que** le procédé comprend en outre l'étape c) consistant à inverser l'ordre axial de la première partie terminale de paroi libre (8 ; 8' ; 8") et de la seconde partie terminale de paroi libre (9 ; 9' ; 9").

14. Kit comprenant la rondelle réalisée en une seule pièce (15 ; 15' ; 20) selon l'une quelconque des revendications précédentes 1 à 11, et une plaque de recouvrement (24) pour le recouvrement d'un espace libre (23) ménagé entre deux structures tubulaires adjacentes (1) prévues avec lesdites rondelles réalisées en une seule pièce (15 ; 15' ; 20).

15. Procédé de montage d'une rondelle réalisée en une seule pièce (15; 15' ; 20) selon l'une quelconque des revendications précédentes 1 à 11 sur une structure tubulaire, **caractérisé en ce que** le procédé comprend les étapes consistant à :
- procurer la rondelle réalisée en une seule pièce (15 ; 15' ; 20) ;
- augmenter l'espace libre (10, 18) entre les parties terminales de parois libres opposées (8; 8'; 8"; 9; 9'; 9") et déplacer l'ouverture centrale (16) pour faire en sorte qu'elle entoure la structure tubulaire (1) ; et
- disposer la première partie terminale de paroi libre (8 ; 8' ; 8") et la seconde partie terminale de paroi libre 9' ; 9") en une relation de chevauchement réciproque.
